# EUROPÄISCHE PATENTSCHRIFT

(11) **EP 3 737 072 B1**
(45) Veröffentlichungstag und Bekanntmachung des Hinweises auf die Patenterteilung: **21.04.2021**
(21) Anmeldenummer: 19172773.4
(22) Anmeldetag: 06.05.2019
(51) Int. Cl.: H04M 1/02, H04N 7/18, H04M 11/02

(54) **TÜRSTATION FÜR EINE TÜRKOMMUNIKATIONSANLAGE**
DOOR STATION FOR A DOOR COMMUNICATION SYSTEM
MODULE DE PORTE POUR UNE INSTALLATION DE COMMUNICATION DE PORTE

(43) Veröffentlichungstag der Anmeldung: 11.11.2020
(73) Patentinhaber: GIRA GIERSIEPEN GmbH & Co. KG, 42477 Radevormwald (DE)
(72) Erfinder: SCHIMMELPFENNIG, Frank, 42477 Radevormwald (DE)
(74) Vertreter: Angerhausen, Christoph

(56) Entgegenhaltungen:
- WO-A1-2017/117137
- DE-A1- 10 007 557
- US-A1- 2015 029 335
- US-A1- 2018 047 266

## Beschreibung

Die Erfindung geht aus von einer Türstation für eine Türkommunikationsanlage, wobei die Türstation ein Gehäuse mit einer an der Vorderseite des Gehäuses angeordneten optisch transparenten Abdeckung aufweist, hinter der ein Kameramodul angeordnet ist wobei hinter derselben Abdeckung eine Vorrichtung zum Erfassen eines Fingerabdrucks angeordnet ist. Eine derartige Türstation ist in der US 2015/0029335 A1 beschrieben. Die EP 0 786 745 B1 beschreibt ein Zutrittskontrollsystem, bei dem die Authentifizierung einer zugangsberechtigten Person mit Hilfe eines Fingerprint-Sensors erfolgt. Eine kamerabasierte Fingerprint-Auswertung ist in der CN 105303177 A beschrieben. Die DE 20 2010 004 647 U1 beschreibt eine Montageanordnung für die Türkommunikation, bei der hinter einer transparenten Abdeckung ein Kameramodul angeordnet ist. Eine ähnliche Vorrichtung ist auch in der DE 103 40 763 B4 beschrieben. Weitere Vorrichtungen sind bekannt aus den Druckschriften DE 20 2011 110 280 U1, US 2018/0047266 und WO 2017/117137 A1.

Die aus dem Stand der Technik bekannten Türkommunikationsanlagen erlauben eine audiovisuelle Kommunikation zwischen einem Besucher und einem Besuchten eines Gebäudes oder Gebäudekomplexes. Bei Anlagen, die nicht nur eine Audiokommunikation sondern darüber hinaus auch eine Videobildübertragung ermöglichen, weist die Türstation häufig mindestens eine Kamera auf. Darüber hinaus sollen Zutrittskontrollsysteme mit Fingerprint-Sensoren insbesondere dem Inhaber oder Bewohner der Wohn- oder Gewerbeeinheit einen komfortablen und schnellen Zutritt erlauben.

Türkommunikationsanlagen, die sowohl eine audiovisuelle Kommunikation als auch eine Zutrittskontrolle mit Hilfe eines Fingerprint-Sensors erlauben, sind in der Regel modular aufgebaut, so dass sowohl für die Kameraeinheit als auch für den Fingerprint-Sensor jeweils ein separates Modul vorgesehen ist. Dadurch weisen die Türstationen entsprechend große Bauabmessungen auf. Des Weiteren limitiert der modulare Aufbau die gestalterische Freiheit der Türstation.

Es ist daher die Aufgabe der Erfindung, eine Türstation der eingangs beschriebenen Art derart weiterzuentwickeln, dass trotz Implementierung eines biometrischen Sensors in die Türstation eine kompakte Bauform der Türstation erhalten werden kann.

Diese Aufgabe wird durch eine Türstation mit den Merkmalen des Anspruchs 1 gelöst. Die abhängigen Ansprüche betreffen jeweils vorteilhafte Ausführungsformen der Erfindung.

Demgemäß ist vorgesehen, dass die Vorrichtung zum Erfassen eines Fingerabdrucks einen Näherungssensor aufweist, der dazu eingerichtet ist, eine Annäherung eines Objekts an die Vorderseite des Gehäuses zu detektieren, wobei das Kameramodul dazu eingerichtet ist, bei Detektion der Annäherung einen Betriebsmodus zum Erfassen des Fingerabdrucks einzunehmen.

Die Erfindung macht sich somit die bei den aus dem Stand der Technik häufig ohnehin vorgesehene optisch transparente Abdeckung des Kameramoduls zunutze, um hinter dieser über das Kameramodul hinaus weiterhin eine Vorrichtung zum Erfassen eines Fingerabdrucks, beispielsweise einen entsprechenden Sensor, anzuordnen. Aus gestalterischen Gründen kann es beispielsweise wünschenswert sein, die optisch transparente Abdeckung rechteckig auszubilden, weil die Türstation eine entsprechende rechteckige Außengeometrie aufweist, während das dahinter angeordnete Kameramodul, zumindest dessen vorstehende Optik, eine im Wesentlichen runde oder sphärische Geometrie aufweist, so dass insbesondere in einem Eckbereich der transparenten Abdeckung Platz geschaffen ist, um dort die Vorrichtung zum Erfassen eines Fingerabdrucks unterzubringen.

Die optisch transparente Abdeckung muss darüber hinaus keinen weiteren Anforderungen außer ihrer optischen Transparenz genügen, wenn die Vorrichtung zum Erfassen des Fingerabdrucks eine ebensolche optisch sensitive Vorrichtung ist, beispielsweise ein optischer Fingerprint-Sensor.

Die transparente Abdeckung kann ein Deckglas aus Silikatglas oder Kunststoff sein.

Das Kameramodul kann beispielsweise ein Objektiv mit einem variablen Fokus aufweisen, der zwischen einem Fokus für das Erfassen eines Fingerabdrucks auf der Abdeckung und mindestens einem Fokus für das Erfassen eines unter einem Abstand zu der Abdeckung von der Türstation angeordneten Objekts hin und her verstellt werden kann. In diesem Falle kann beispielsweise unter Verwendung des zuvor beschriebenen Näherungssensors bei einer erfassten Annäherung einer Person oder eines Fingers an die Türstation der Fokus des Objektivs auf den Fokus für das Erfassen eines Fingerabdrucks auf der Abdeckung eingestellt werden. Der Näherungssensor kann unterhalb der transparenten Abdeckung, das heißt außerhalb des von der Abdeckung bedeckten Bereichs angeordnet sein, er kann jedoch alternativ ebenso wie die Vorrichtung zum Erfassen des biometrischen Merkmals hinter der transparenten Abdeckung platzsparend implementiert sein.

Es kann somit eine Ausführungsform der Erfindung realisiert werden, bei der das Kameramodul der Türstation, welches bei den aus dem Stand der Technik bekannten Vorrichtungen für die Implementierung der Videokommunikation vorgesehen ist, nunmehr auch für das Erfassen des Fingerabdrucks auf der Abdeckung eingerichtet ist, indem es den zuvor beschriebenen variabel einstellbaren Fokus aufweist. Neben einer Variation des Fokus kann alternativ oder zusätzlich vorgesehen sein, dass die optische Achse des Objektivs verstellbar ist, beispielsweise entsprechend einer optischen Tilt- und/oder Shift-Funktion, um das Kameramodul zwischen einem Betriebsmodus für das Erfassen eines Fingerabdrucks und einem Betriebsmodus für das Erfassen eines Objekts unter einem Abstand zur Türstation hin und her zu verstellen.

Alternativ oder zusätzlich ist es denkbar, dass das Kameramodul ein Objektiv mit einer variablen Brennweite aufweist, wobei die Brennweite zwischen einer Brennweite für das Erfassen eines Fingerabdrucks auf der Abdeckung und mindestens einer Brennweite für das Erfassen eines unter einem Abstand zu der Abdeckung vor der Türstation angeordneten Objekts hin und her verstellt werden kann. Hierbei kann insbesondere vorgesehen sein, dass die Brennweite für das Erfassen des Fingerabdrucks geringer als die Brennweite für das Erfassen des unter einem Abstand zu der Abdeckung angeordneten Objekts ist. So kann beispielsweise vorgesehen sein, dass in einem Weitwinkelmodus des Objektivs im Randbereich des Bildfeldes ein Auflage- oder Betätigungsfeld der Abdeckung für die Applizierung eines Fingerabdrucks angeordnet ist, welches Auflagefeld bei der größeren Brennweite für das Erfassen des unter einem Abstand zu der Türstation angeordneten Objekts, außerhalb des Bildfeldes des Objektivs liegt. In dem Weitwinkelmodus kann dann durch Bildverarbeitung der im Randbereich abgebildete Fingerabdruck für die Zugangskontrolle ausgewertet werden. Bei der größeren Brennweite für die Videokommunikation hingegen beeinträchtigt das Fingerabdruckfeld in der Abdeckung nicht das übertragene Videobild, da es außerhalb des Bildfeldes des Objektivs liegt.

So kann der Fingerabdruck bei der Brennweite für das Erfassen eines Fingerabdrucks innerhalb eines Erfassungsbereichs des Objektivs und bei der Brennweite für das Erfassen eines unter einem Abstand zu der Abdeckung vor der Türstation angeordneten Objekts außerhalb eines Erfassungsbereichs des Objektivs liegen.

Das Kameramodul kann einen infrarotempfindlichen Bildsensor und eine Lebenderkennung aufweisen. Dabei kann eine optische Einheit der Vorrichtung zum Erfassen eines biometrischen Merkmals dazu eingerichtet sein, bei auf der Außenseite der Abdeckung angeordnetem Fingerabdruck Infrarotstrahlung von der Abdeckung dem Kameramodul zuzuleiten.

Die Türstation kann eine optische Einheit aufweisen, die über eine Verstelleinheit zwischen einer ersten Position, in der das Abbild eines auf der Außenseite der Abdeckung angeordneten Fingerabdrucks im Erfassungsbereich des Kameramoduls liegt und einer zweiten Position, in der das Abbild außerhalb des Erfassungsbereichs der Kamera liegt, hin und her verstellt werden.

Weitere Einzelheiten der Erfindung werden anhand der nachstehenden Figuren erläutert. Dabei zeigt:
- Figur 1: in schematischer Darstellung eine Draufsicht auf die Vorderseite einer Ausführungsform einer erfindungsgemäßen Türstation; und
- Figur 2: in schematischer Darstellung eine Seitenquerschnittsansicht der Ausführungsform gemäß Figur 1.

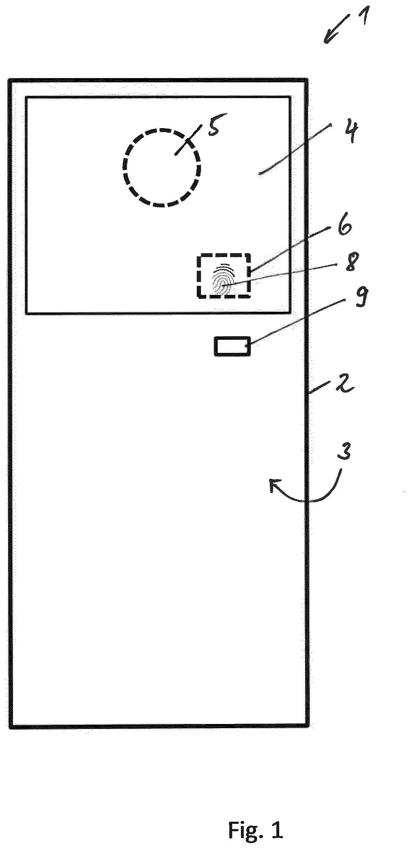

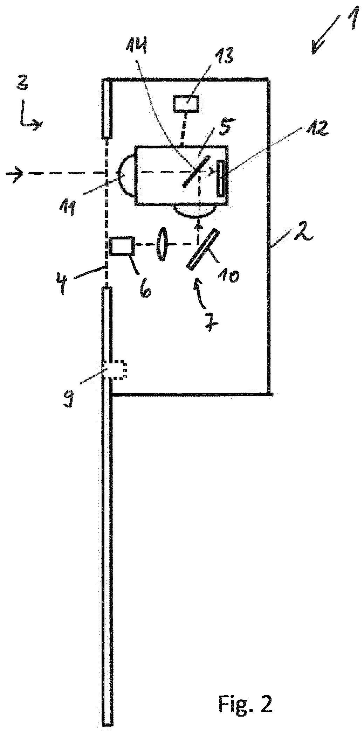

Die in den Figuren 1 und 2 gezeigte Türstation 1 für eine Türkommunikationsanlage weist ein rechteckiges Gehäuse 2 auf, das an seiner Vorderseite 3 ein hinter einer transparenten Abdeckung 4 angeordnetes Kameramodul 5 aufweist. Für die Herstellung einer Sprachverbindung kann die Türstation 1 weiterhin einen Lautsprecher und ein Mikrofon aufweisen, welche beispielsweise durch ein unterhalb der transparenten Abdeckung 4 angeordnetes und nicht dargestelltes Module implementiert sein können.

Aus gestalterischen Gründen kann die transparente Abdeckung 4 wesentlich größer als das Kameramodul 5 beziehungsweise das der Abdeckung 4 zugewandte Objektiv 11 des Kameramoduls 5 ausgebildet sein, so dass die Abdeckung 4 das Kameramodul 5 überragt. In einem Eckbereich der Abdeckung 4 ist hinter der Abdeckung 4 eine Vorrichtung 6 zum Erfassen eines biometrischen Merkmals angeordnet. Die Vorrichtung 6 kann beispielsweise ein optischer Fingerprint-Sensor oder eine optische Iriserkennung sein und ist in der vorliegenden Ausführungsform gemäß den Figuren 1 und 2 als ein Fingerprint-Sensor ausgebildet. Auf der Abdeckung 4 ist in dem Bereich dieser, mit welchem die Abdeckung 4 die Vorrichtung 6 bedeckt zur Veranschaulichung ein auf der Abdeckung 4 applizierter Fingerabdruck 8 symbolisch angedeutet ist.

Unterhalb der transparenten Abdeckung 4 ist ein Näherungssensor 9 angeordnet, um ein Annähern einer Person oder eines Fingers der Person an den Fingerprint-Sensor 6 zu erfassen, um beispielsweise den Fingerprint-Sensor 6 in einen entsprechenden Erfassungsbereitschaftsmodus zu bringen, ein Einschalten des Kameramoduls 5 auszulösen, oder dergleichen. Der Näherungssensor 9 ist bei der Ausführungsform gemäß den Figuren 1 und 2 unterhalb der transparenten Abdeckung 4 angeordnet, er kann jedoch alternativ ebenfalls hinter der transparenten Abdeckung 4 platzsparend implementiert sein.

Die transparente Abdeckung 4 bedarf grundsätzlich keiner Nachbearbeitung um die Positionierung der Vorrichtung 6 zum Erfassen des biometrischen Merkmals zu erlauben. Bei Verwendung nicht rein optisch arbeitender Sensoren innerhalb der Vorrichtung 6, beispielsweise wenn ein elektrischer Leitwert eines aufgelegten Fingers erfasst werden soll, kann vorgesehen sein, dass die Abdeckung 4 im Bereich der Vorrichtung 6 einen Ausschnitt oder Durchbruch aufweist, so dass von außerhalb der Türstation 4 auf die hinter der Abdeckung 4 angeordnete Vorrichtung 6 zugegriffen werden kann.

Die Vorrichtung 6 kann weiterhin eine optische Einheit 7 aufweisen, die dazu eingerichtet ist, ein Abbild eines auf der Außenseite der Abdeckung 4 angeordneten Fingerabdrucks 8 dem Kameramodul 5 zuzuleiten. Bei dieser Ausführung;form weist dann das Kameramodul 5 eine Doppelfunktion auf, indem es in einem ersten Betriebsmodus für die Realisierung der Videokommunikation zwischen der vor der Türstation und einer vor der Wohnungsstation der Türkommunikationsanlage stehenden Person realisiert, während das Kameramodul 5 weiterhin einen zweiten Betriebsmodus aufweist, in dem es einen auf der Abdeckung 4 angeordneten Fingerabdruck 8, der über das optische System 7 an das Kameramodul 5 weitergeleitet wird, auswertet, beispielsweise zur Authentifizierungszwecken. Das optische System 7 kann, wie dargestellt, mindestens eine Linse und/oder mindestens einen Spiegel 10 oder auch mindestens ein Prisma (nicht dargestellt) aufweisen. Ein halbdurchlässiger Spiegel 14 innerhalb des Kameramoduls 5 kann dazu vorgesehen sein, um mit dem Bildsensor 12 des Kameramoduls 5 sowohl von der optischen Einheit 7 als auch über das Objektiv 11 dem Kameramodul 5 zugeführte Bilder abzubilden und in einen entsprechendes digitales Signal umzuwandeln.

Alternativ zu der in den Figuren 1 und 2 gezeigten Ausführungsform kann die Vorrichtung 6 zum Erfassen des biometrischen Merkmals jedoch auch völlig unabhängig von dem Kameramodul 5 zum Aufbauen der Videobildübertragung realisiert sein. Insbesondere dann, wenn die Vorrichtung 6 zum Erfassen des biometrischen Merkmals jedoch im Wesentlichen optisch realisiert ist, bietet es sich an, das Kameramodul 5 neben der Videobildübertragung auch für die Auswertung des biometrischen Merkmals, zumindest jedoch für dessen optische Erfassung zu verwenden.

### Bezugszeichenliste

- 1: Türstation
- 2: Gehäuse
- 3: Vorderseite
- 4: Abdeckung
- 5: Kameramodul
- 6: Vorrichtung zum Erfassen eines biometrischen Merkmals
- 7: optische Einheit
- 8: Fingerabdruck
- 9: Näherungssensor
- 10: Spiegel
- 11: Objektiv
- 12: Bildsensor
- 13: Lebenderkennung
- 14: teildurchlässiger Spiegel

## Patentansprüche

1. Türstation (1) für eine Türkommunikationsanlage, mit einem Gehäuse (2), das an seiner Vorderseite (3) eine optisch transparente Abdeckung (4) aufweist, hinter der ein Kameramodul (5) angeordnet ist, wobei hinter derselben Abdeckung (4) eine Vorrichtung (6) zum Erfassen eines Fingerabdrucks angeordnet ist, **dadurch gekennzeichnet, dass** die Vorrichtung (6) zum Erfassen des Fingerabdrucks einen Näherungssensor (9) aufweist, der dazu eingerichtet ist, eine Annäherung eines Objekts an die Vorderseite (3) des Gehäuses (2) zu detektieren, wobei das Kameramodul (5) dazu eingerichtet ist, bei Detektion der Annäherung einen Betriebsmodus zum Erfassen des Fingerabdrucks (8) einzunehmen.

2. Türstation (1) nach Anspruch 1, bei der die transparente Abdeckung (4) ein Deckglas aus Silikatglas oder Kunststoff ist.

3. Türstation (1) nach einem der vorangegangenen Ansprüche, bei der das Kameramodul (5) ein Objektiv (11) mit einem variablen Fokus aufweist, wobei der Fokus zwischen einem Fokus für das Erfassen eines Fingerabdrucks (8) auf der Abdeckung (4) und mindestens einem Fokus für das Erfassen eines unter einem Abstand zu der Abdeckung (4) vor der Türstation (1) angeordneten Objekts hin und her verstellt werden kann.

4. Türstation (1) nach einem der vorangegangenen Ansprüche, bei der das Kameramodul (5) ein Objektiv (11) mit einer variablen Brennweite aufweist, wobei die Brennweite zwischen einer Brennweite für das Erfassen eines Fingerabdrucks (8) auf der Abdeckung (4) und mindestens einer Brennweite für das Erfassen eines unter einem Abstand zu der Abdeckung (4) vor der Türstation (1) angeordneten Objekts hin und her verstellt werden kann.

5. Türstation (1) nach Anspruch 4, bei der der Fingerabdruck (8) bei der Brennweite für das Erfassen eines Fingerabdrucks (8) innerhalb eines Erfassungsbereichs des Objektivs (11) und bei der Brennweite für das Erfassen eines unter einem Abstand zu der Abdeckung (4) vor der Türstation (1) angeordneten Objekts außerhalb eines Erfassungsbereichs des Objektivs (11) liegt.

6. Türstation (1) nach einem der vorangegangenen Ansprüche, bei der das Kameramodul (5) einen infrarotempfindlichen Bildsensor (12) und eine Lebenderkennung (13) aufweist.

7. Türstation (1) nach Anspruch 6, bei der eine optische Einheit (7) der Vorrichtung (6) zum Erfassen eines biometrischen Merkmals dazu eingerichtet ist, bei auf der Außenseite der Abdeckung (4) angeordnetem Fingerabdruck (8) Infrarotstrahlung von der Abdeckung (4) dem Kameramodul (5) zuzuleiten.

8. Türstation (1) nach einem der vorangegangenen Ansprüche, die eine optische Einheit (7) aufweist, die über eine Verstelleinheit zwischen einer ersten Position, in der das Abbild eines auf der Außenseite der Abdeckung (4) angeordneten Fingerabdrucks (8) im Erfassungsbereich des Kameramoduls (5) liegt, und einer zweiten Position, in der das Abbild außerhalb des Erfassungsbereichs des Kameramoduls (5) liegt, hin und her verstellbar ist.

## Claims

1. A door station (1) for a door communication system, having a housing (2) which has on its front side (3) an optically transparent cover (4) behind which a camera module (5) is arranged, a device (6) for capturing a fingerprint being arranged behind the same cover (4), **characterized in in that** the device (6) for capturing the fingerprint has a proximity sensor (9) which is set up to detect an approach of an object to the front side (3) of the housing (2), the camera module (5) being set up to adopt an operating mode for capturing the fingerprint (8) when the approach is detected.

2. The door station (1) according to claim 1, wherein the transparent cover (4) is a cover glass made of silicate glass or plastic.

3. The door station (1) according to any one of the preceding claims, wherein the camera module (5) comprises a lens (11) with a variable focus, which focus can be adjusted back and forth between a focus for capturing a fingerprint (8) on the cover (4) and at least one focus for capturing an object arranged at a distance from the cover (4) in front of the door station (1).

4. The door station (1) according to any of the preceding claims, wherein the camera module (5) comprises a lens (11) with a variable focal length, which focal length can be adjusted back and forth between a focal length for capturing a fingerprint (8) on the cover (4) and at least one focal length for capturing an object arranged at a distance from the cover (4) in front of the door station (1).

5. The door station (1) according to claim 4, wherein the fingerprint (8) lies within a detection range of the lens (11) at the focal length for detecting a fingerprint (8) and lies outside a detection range of the lens (11) at the focal length for detecting an object arranged at a distance from the cover (4) in front of the door station (1).

6. The door station (1) according to any one of the preceding claims, wherein the camera module (5) comprises an infrared sensitive image sensor (12) and a life detection (13).

7. The door station (1) according to claim 6, wherein an optical unit (7) of the device (6) for detecting a biometric feature is arranged to supply infrared radiation from the cover (4) to the camera module (5) when the fingerprint (8) is arranged on the outside of the cover (4).

8. The door station (1) according to any one of the preceding claims, comprising an optical unit (7) which is adjustable via an adjustment unit between a first position, in which the image of a fingerprint (8) arranged on the outside of the cover (4) lies within the detection range of the camera module (5), and a second position, in which the image lies outside the detection range of the camera module (5).

## Revendications

1. Station de porte (1) pour une installation de communication de porte, avec un boîtier (2), qui comprend, sur son côté avant (3), un couvercle transparent (4), derrière lequel est disposé un module de caméra (5), dans laquelle, derrière ce couvercle (4), est disposé un dispositif (6) pour la saisie d'une empreinte digitale, **caractérisée en ce que** le dispositif (6) pour la saisie de l'empreinte digitale comprend un capteur de proximité (9) qui est conçu pour détecter l'approche d'un objet vers le côté avant (3) du boîtier (2), dans laquelle le module de caméra (5) est conçu pour passer, lors de la détection d'approche, dans un mode de fonctionnement pour la saisie de l'empreinte digitale (8).

2. Station de porte (1) selon la revendication 1, dans laquelle le couvercle transparent (4) est un verre de protection en verre au silicate ou en matière plastique.

3. Station de porte (1) selon l'une des revendications précédentes, dans laquelle le module de caméra (5) comprend un objectif (11) avec une focalisation variable, dans laquelle la focalisation peut être réglée, avec un mouvement de va-et-vient, entre une focalisation pour la saisie d'une empreinte digitale (8) sur le couvercle (4) et au moins une focalisation pour la détection d'un objet disposé à une distance du couvercle (4) devant la station de porte (1).

4. Station de porte (1) selon l'une des revendications précédentes, dans laquelle le module de caméra (5) comprend un objectif (11) avec une focale variable, dans laquelle la focale peut être réglé, avec un mouvement de va-et-vient, entre une focale pour la saisie d'une empreinte digitale (8) sur le couvercle (4) et au moins une focale pour la détection d'un objet disposé à une distance du couvercle (4) devant la station de porte (1).

5. Station de porte (1) selon la revendication 4, dans laquelle l'empreinte digitale (8) se trouve, pour la focale pour la saisie d'une empreinte digitale (8), à l'intérieur d'une zone de détection de l'objectif (11) et, pour la focale pour la détection d'un objet disposé à une distance du couvercle (4) devant la station de porte (1), à l'extérieur d'une zone de détection de l'objectif (11).

6. Station de porte (1) selon l'une des revendications précédentes, dans laquelle le module de caméra (5) comprend un capteur d'image sensible à l'infrarouge (12) et une reconnaissance d'état vivant (13).

7. Station de porte (1) selon la revendication 6, dans laquelle une unité optique (7) du dispositif (6) pour la détection d'une caractéristique biologique est conçue pour introduire, dans le module de caméra (5), un rayonnement infrarouge provenant du couvercle (4) lorsque l'empreinte digitale (8) se trouve sur le côté externe du couvercle (4).

8. Station de porte (1) selon l'une des revendications précédentes, qui comprend une unité optique (7) qui peut être réglée, avec un mouvement de va-et-vient, par l'intermédiaire d'une unité de réglage, entre une première position, dans laquelle la représentation d'une empreinte digitale (8) disposé sur le côté extérieur du couvercle (4) se trouve dans la zone de détection du module de caméra (5), et une deuxième position dans laquelle la représentation se trouve à l'extérieur de la zone de détection du module de caméra (5).
